# EUROPÄISCHE PATENTANMELDUNG

(11) **EP 1 010 485 A2**
(43) Veröffentlichungstag der Anmeldung: **21.06.2000**
(21) Anmeldenummer: 99122890.9
(22) Anmeldetag: 18.11.1999
(51) Int. Cl.: B23B 47/28

(54) **Scharnierbohrlehre**

(30) Priorität: 19.12.1998 DE 19858910
(71) Anmelder: Klapperich, Leo, D-56653 Wehr (DE)
(72) Erfinder: Klapperich, Leo, D-56653 Wehr (DE)
(74) Vertreter: Kossobutzki, Walter, Dipl.-Ing.(FH)

(57) **Zusammenfassung**

Die Erfindung bezieht sich auf eine Vorrichtung zum positionsgenauen Führen von Topfbohrern, insbesondere zur Bildung von Sacklöcher für Topfscharniere in plattenartigen aus Holz oder Holzersatzwerkstoff bestehenden Bauteilen.

Um ein positionsgenaues Führen von Topfbohrern zur Bildung von Sacklöchern für Topfscharniere zu ermöglichen und auszuschließen, daß das Sackloch verlaufen bzw. unrund werden kann, besteht die Vorrichtung aus einen U-förmigen, auf das plattenartige Bauteil (2) aufschiebbaren Grundkörper (3), der in seinem einen Schenkel (5) eine Spannschraube (8) besitzt und in seinem anderen Schenkel (4) einen senkrecht zum Steg (6) verschiebbaren, gegen die Bauplatte (2) festspannbaren Schlitten (11) mit einer Führungsöffnung (12) für den Topfbohrer (14) aufweist.

## Beschreibung

Die Erfindung bezieht sich auf eine Vorrichtung zum positionsgenauen Führen von Topfbohrern, insbesondere zur Bildung von Sacklöcher für Topfscharniere in plattenartigen aus Holz oder Holzersatzwerkstoff bestehenden Bauteilen.

Für die Befestigung von sogenannten Topfscharnieren an Möbel oder ähnlichen Gegenständen ist es erforderlich, in den plattenartigen Bauteilen des Möbels, beispielsweise in einem Schrankteil und einer Tür, Sacklöcher bzw. Sackbohrungen herzustellen, in denen dann die Topf teile der Topfscharniere befestigt werden. Dabei ist es besonders wichtig, daß sich die Sacklöcher in einer genau vorgegebenen Position befinden, da Abweichungen davon den Sitz der Türe - es kann auch eine Klappe sein - beeinträchtigen. Derartige Sacklöcher werden mit sogenannten Topfbohrern, die auch als Forstnerbohrungen bezeichnet werden, hergestellt. Selbst dann, wenn die Position für ein Sackloch äußerst genau angerissen wurde, kann es vorkommen, daß der Topfbohrer verläuft, da derselbe keine ausreichende Führungspitze besitzt. Ein solches Verlaufen kann insbesondere auch dann auftreten, wenn das plattenartige Bauteil, in dem das Sackloch hergestellt werden soll, aus verhältnismäßig weichem Holz mit unterschiedlicher Faserstruktur besteht. Weiterhin ist zu berücksichtigen, daß derartige Sacklöcher meistens mit einer Handbohrmaschine hergestellt werden, bei der der eingesetzte Bohrer grundsätzlich keinerlei Führung hat.

Der Erfindung liegt deshalb die Aufgabe zugrunde, eine Vorrichtung zum positionsgenauen Führen von Topfbohrern bei der Bildung von Sacklöchern für Topfscharniere zu schaffen, die nicht nur eine sehr genaue Anordnung des Sackloches ermöglicht, sondern die darüber hinaus auch ausschließt, daß das Sackloch verlaufen bzw. unrund werden kann. Zusätzlich soll diese Vorrichtung auch so ausgebildet sein, daß der Topfbohrer nur auf eine vorgegebene Tiefe vorschiebbar ist, so daß Durchbrüche in den plattenartigen Bauteilen vermieden werden. Dies kann insbesondere dann der Fall sein, wenn das herzustellende Sackloch eine der Dicke des Bauteiles sehr nahe kommende Tiefe aufweist.

Zur Lösung dieser Aufgabe besteht die Vorrichtung gemäß der Erfindung aus einem U-förmigen, auf das plattenartige Bauteil auf- schiebbaren Grundkörper, der in seinem einen Schenkel eine Spannechraube besitzt und in seinem anderen Schenkel einen senkrecht zum Steg verschiebbaren, gegen die Bauplatte festspannbaren Schlitten mit einer Führungsöffnung für den Topfbohrer aufweist.

Eine solche Vorrichtung kann sehr genau auf dem plattenartigen Bauteil, in dem ein Sackloch hergestellt werden soll, ausgerichtet werden. Dazu ist die Vorrichtung mit Skalen und/oder einem Koordinatenkreuz versehen. Der Topfbohrer wird sehr präzise bis zur Bohrstelle geführt. Ein Verlaufen des Bohrers ist nicht mehr möglich. Dies ist dann besonders von Vorteil, wenn die Sacklöcher mittels einer ungeführten Handbohrmaschine hergestellt werden. Darüber hinaus kann aber auch der Bohrungsrand bzw. der Rand des Sackloches nicht mehr ausreißen, weil sich die Anpreßkante der Führungsöffnung direkt an den Bohrbereich anschließt. Darüber hinaus ermöglicht die erfindungsgemäße Vorrichtung auch das Herstellen von Sacklöchern, die beispielsweise ineinander- greifen und/oder zumindest teilweise außerhalb des plattenartigen Bauteiles liegen.

Weitere Merkmale einer Vorrichtung gemäß der Erfindung sind in den Ansprüchen 2 bis 7 offenbart.

Die Erfindung wird nachfolgend anhand eines in einer Zeichnung in vereinfachter Weise dargestellten Ausführungsbeispieles näher erläutert.

In dieser Zeichnung ist eine Vorrichtung 1, teilweise geschnitten, gezeigt, die zur positionsgenauen Herstellung von Sacklöchern für sogenannte Topfschaniere in einem plattenartigen Bauteil 2, beispielsweise aus Holz, mittels einer ungeführten Handbohrmaschine dient. Diese Vorrichtung 1 besteht aus einem Grundkörper 3, beispielsweise aus Kunststoff, der eine U-förmige Gestalt besitzt und der im dargestellten Ausführungebeispiel auf das plattenartige Bauteil 2 von hinten aufgesteckt ist. Dieser U-förmige Grundkörper 3 besitzt einen oberen Schenkel 4, der an der Oberseite des plattenartigen Bauteiles 2 aufliegt und einen unteren Schenkel 5, der mit dem oberen Schenkel 4 durch einen Steg 6 verbunden ist. Im dargestellten Ausführungsbeispiel ist der Steg 6 mit einer Aussparung 7 versehen. Der untere Schenkel 5 besitzt eine nicht näher gekennzeichnete Gewindebohrung, in die eine Schraube 8 eingedreht ist. Diese Schraube 8 besitzt an ihrem inneren Ende eine Spannplatte 9, die an der Unterseite des plattenartigen Bauteiles 2 zum Anliegen bringbar ist.

Der obere Schenkel 4 des U-förmigen Grundkörpers 3 weist eine senkrecht zur Zeichnungsebene verlaufende, seitlich profilierte Aussparung 10 auf, in der ein Schlitten 11 senkrecht zur Zeichnungsebene verschiebbar geführt ist. Dieser Schlitten 11 besitzt eine abgestufte Bohrung 12, in die von unten eine Hülse 13 ein gesteckt ist. Diese Hülse 13 liegt an einer umlaufenden Stufe 14 der Bohrung 12 an. Der Schlitten 11 kann in vorteilhafter Weise ebenfalls aus Kunststoff bestehen, während die Hülse 13 aus Metall hergestellt ist.

Die Länge der Hülse 13 ist nun so bemessen, daß deren untere Begrenzungsfläche sich in einer Ebene mit der unteren bzw. inneren Fläche des Schenkels 4 befindet. Es ist vorteilhaft, wenn die untere Begrenzungsfläche der Hülse 13 geringfügig über die untere bzw. innere Begrenzungsfläche des Schenkels 4 hinausragt. Der Außendurchmesser der Hülse 13 ist so bemessen, daß dieselbe klemmend von der Bohrung 12 des Schlittens 11 aufgenommen wird. Es ist jedoch vorteilhaft, wenn in dem Schlitten 11 oder in der Hülse 13 mindestens eine federbelastete Kugel radial geführt ist, die entweder über die äußere Mantelfläche der Hülse 13 oder die innere Mantelfläche der Bohrung 12 hinausragt. Im Gegensatz dazu besitzt dann die innere Mantelfläche der Bohrung 12 oder die äußere Mantelfläche der Hülse 13 eine segmentartige Aussparung, in die die federbelastete Kugel einrasten kann. Auch dies stellt eine Sicherung der Hülse 13 gegen Verdrehen in der abgestuften Bohrung 12 dar. Für den Fall, daß der Schlitten 11 aus Kunststoff besteht, kann die vorbeschriebene Kugel durch einen entsprechenden, federnden Vorsprung an der inneren Mantelfläche der Bohrung 12 ersetzt werden.

An der Oberseite des Schenkels 4 und an der Oberseite des Schlittens 11 können Skalen und ein Koordinatenkreuz vorgesehen sein, über die die Vorrichtung 1 sehr genau auf die herzustellende Topfbohrung bzw. Sacklochbohrung ausgerichtete werden kann. Zum leichten Verschieben des Schlittens 11 in dem Schenkel 4 kann der Schlitten 11 an seiner Oberseite beispielsweise eine Fingermulde besitzen.

Die Hülse 13 ist in dem Schlitten 11 auswechselbar gehalten. Der Innendurchmesser der Hülse 13 entspricht dem Außendurchmesser eines oberhalb der Vorrichtung 1 gezeichneten Topfbohrers 14. Die Hülse 13 stellt nun bei der Herstellung einer Topfbohrung bzw. einer Sacklochbohrung in dem plattenartigen Bauteil 2 sicher, daß die Bohrung sehr genau an der vorgegebenen Stelle erzeugt wird und daß der Topfbohrer 14 keinerlei Möglichkeit hat, zu verlaufen. Darüber hinaus wird auch ein Ausreißen des Bohrungsrandes in dem plattenartigen Bauteil 2 vermieden, da die Unterseite der Hülse 13 fest an der Oberfläche des plattenartigen Bauteiles 2 anliegt. Dies ist dann besonders sichergestellt, wenn, wie bereits erwähnt, die Hülse 13 geringfügig über die Unterseite des Schlittens 11 hinausragt. Wird beispielsweise ein Topfbohrer 14 mit einem größeren Durchmesser verwendet, ist es lediglich erforderlich, die Hülse 13 zu entfernen und durch eine andere Hülse 13 mit einem größeren Innendurchmesser, der dem Außendurchmesser des neuen Topfbohrers 14 entspricht, zu ersetzen.

Im dargestellten Ausführungsbeispiel ist an dem Schaft 15 des Topfbohrers 14 ein sogenannter Tiefenanschlag 16 vorgesehen, der aus einer an dem Schaft 15 befestigten Hülse 17 und einem Ring 18 besteht, der auf der Hülse 17 drehbar gelagert ist. Zusätzlich weist der Ring 18 an seiner Mantelfläche mindestens eine Nut 19 auf, in die ein nur angedeutetes Lineal eingesteckt werden kann. Dadurch ist es möglich, den Tiefenanschlag 16 genau einzustellen und auszuschließen, daß das Sackloch bzw. die Topfbohrung tiefer hergestellt wird, als dies erforderlich ist. Damit sind aber auch Durchbrücke beim Herstellen von Sacklöchern bzw. Topflöchern ausgeschlossen. Der drehbare Tiefenanschlag 16 ist besonders dann von Vorteil, wenn das zu erzeugende Sackloch eine besonders große Tiefe aufweisen soll, die zunächst ein Entfernen der Vorrichtung 1 erforderlich macht. Sodann wird ohne Vorrichtung 1 weiter gebohrt. Durch die drebbare Ausbildung des Tiefenanschlages 16 wird dann eine Beschädigung der Oberfläche des plattenartigen Bauteiles 2 vermieden. Wenn Sacklöcher mit nur geringer Tiefe gebohrt werden sollen, kann der Tiefenanschlag 16 glockenartig, den Topf des Bohrers 14 teilweise übergreifend ausgebildet sein.

Der Schlitten 11 ist auch ohne den Grundkörper 3 für das Bohren von Sacklöchern in einen plattenartigen Bauteil 2 verwendbar. Er kann dann beispielsweise mit einer Schraubzwinge auf dem plattenartigen Bauteil 2 festgespannt werden. Ein exaktes Ausrichten ist in einem solchen Fall jedoch nicht möglich.

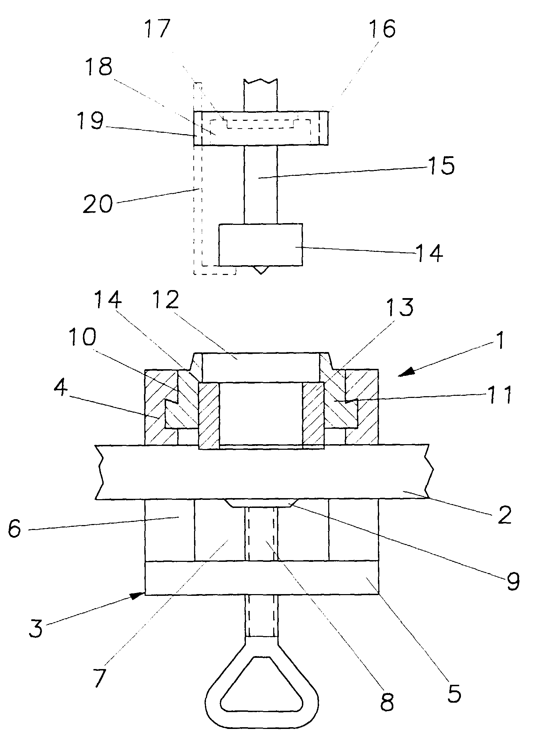

## Patentansprüche

1. Vorrichtung zum positionsgenauen Führen von Topfbohrern, insbesondere zur Bildung von Sacklöcher für Topfscharniere in plattenartigen, aus Holz oder Holzersatzwerkstoff bestehenden Bauteilen,
gekennzeichnet durch
einen U-förmigen, auf das plattenartige Bauteil (2) aufschiebbaren Grundkörper (3), der in seinem einen Schenkel (5) eine Spannschraube (8) besitzt und in seinem anderen Schenkel (4) einen senkrecht zum Steg (6) verschiebbaren, gegen die Bauplatte (2) festspannbaren Schlitten (11) mit einer Führungsöffnung (12) für den Topfbohrer (14) aufweist.

2. Vorrichtung nach Anspruch 1,
dadurch gekennzeichnet,
daß die Führungsöffnung (12) in einer in dem Schlitten (11) befindlichen Hülse (13) ausgebildet ist.

3. Vorrichtung nach Anspruch 2,
dadurch gekennzeichnet,
daß die Hülse (13) auswechselbar im Schlitten (11) angeordnet ist.

4. Vorrichtung nach Anspruch 2 oder 3,
dadurch gekennzeichnet,
daß die Hülse (13) geringfügig über die Unterseite des Schlittens (11) hinausragt.

5. Vorrichtung nach mindestens einem der Ansprüche 1 bis 4,
dadurch gekennzeichnet,
daß der Topfbohrer (14) mit einem drehbar an ihm gesicherten ringförmigen Tiefenanschlag (16) versehen ist.

6. Vorrichtung nach Anspruch 5,
dadurch gekennzeichnet,
daß der Tiefenanschlag (14) an seiner Mantelfläche mindestens eine Nut (19) zur Aufnahme eines Lineals (20) aufweist.

7. Vorrichtung nach Anspruch 5 oder 6,
dadurch gekennzeichnet,
daß der drehbare Tiefenanschlag (14) einen glockenartigen Querschnitt aufweist.
